# FASCICULE DE BREVET EUROPEEN

(11) **EP 1 545 957 B1**
(45) Date de publication et mention de la délivrance du brevet: **25.01.2017**
(21) Numéro de dépôt: 03756037.2
(22) Date de dépôt: 30.05.2003
(51) Int. Cl.: B62B 9/14, B62B 9/26

(54) **SYSTEME DE SOLIDARISATION TEMPORAIRE D'UN ACCESSOIRE SUR UN DISPOSITIF DE PUERICULTURE**
SYSTEM ZUR VORÜBERGEHENDEN VERBINDUNG EINES ZUBEHÖRTEILS MIT EINER KINDERPFLEGEVORRICHTUNG
SYSTEM FOR TEMPORARILY CONNECTING AN ACCESSORY TO A CHILD CARE DEVICE

(30) Priorité: 31.05.2002 FR 0206767; 11.06.2002 FR 0207181
(43) Date de publication de la demande: 29.06.2005
(73) Titulaire: Dorel France, 49309 Cholet Cedex (FR)
(72) Inventeur: ZWEIDECK, Bruno, F-49300 Cholet (FR)
(74) Mandataire: Vidon Brevets & Stratégie
(86) Numéro de dépôt international: PCT/FR2003/001644
(87) Numéro de publication internationale: WO 2003/101804

(56) Documents cités:
- EP-A1- 1 507 693
- WO-A-00/10431
- DE-A- 3 713 409
- DE-A- 4 016 547
- GB-A- 2 265 410
- GB-A- 2 362 680
- US-A- 4 951 997
- US-B1- 6 478 503

## Description

Le domaine de l'invention est celui de la puériculture. Plus précisément, l'invention concerne la mise en oeuvre d'accessoires sur un dispositif de puériculture.

Par dispositif de puériculture, on entend ici tous les dispositifs destinés à recevoir, sous une forme ou une autre, un (ou plusieurs) nouveau-né ou enfant en bas âge, tel que les poussettes, landaus, transats, sièges, sièges autos, lits, etc. Par accessoire, on entend tous les éléments optionnels, susceptibles d'être rapportés sur ou retirés d'un dispositif de puériculture, comme, par exemple, les ombrelles, les canopys, les supports de biberon, les jouets, etc.

D'une façon générale, le montage et/ou le démontage de tels accessoires sur un dispositif de puériculture sont peu aisés. Il est par exemple impossible, actuellement, de mettre en place ou d'ôter facilement et d'une seule main une ombrelle sur une poussette.

Un autre inconvénient des techniques connues et que les accessoires dont généralement développés pour un seul dispositif, ayant ses caractéristiques propres, ou au mieux pour un seul type de dispositifs. Il est par exemple difficile de transférer de façon simple et efficace une ombrelle de poussette sur un autre type de dispositifs.

Des solutions à ces inconvénients ont cependant été proposées, mais s'avèrent peu adaptées ou peu efficaces en pratique. Elles supposent classiquement la présence d'un élément de solidarisation temporaire femelle, qui est équipé de moyens de verrouillage / déverrouillage montés sur le dispositif de puériculture. L'accessoire comprend quant à lui une extrémité mâle, prévue pour coopérer avec l'ombrelle femelle. Cette approche est notamment illustrée par le document GB-2 265 410. Le même principe se retrouve dans les documents US-4 951 997 et DE 40 16 547.

Ce système présente l'inconvénient d'être dédié à un seul dispositif de puériculture, dont le coût risque d'être augmenté, par la présence de l'élément femelle, si celui-ci est prévu dès l'origine, alors qu'il n'y a pas de certitude que l'utilisateur souhaitera utiliser l'accessoire, optionnel par définition.

La présence des moyens de verrouillage /déverrouillage introduit par ailleurs des risques de pincement, ou de coincement, pour l'enfant. En outre, cet élément femelle est généralement peu esthétique, et risque de recueillir de la poussière, de l'eau...

Par ailleurs, lorsqu'il n'y a pas de châssis tubulaire, par exemple sur un siège pour automobile, il est très difficile de fixer un tel élément de solidarisation, et donc, par exemple de mettre en place un canopy, de façon simple, fiable et efficace.

L'invention a notamment pour objectif de pallier ces différents inconvénients de l'art.

Plus précisément, un premier objectif de l'invention est de fournir un système de solidarisation temporaire d'un accessoire qui soit simple à mettre en oeuvre, sans nécessiter d'éléments mobiles complexes sur le dispositif de puériculture correspondant

Un autre objectif de l'invention est de fournir un tel système de solidarisation temporaire, qui permette un montage et un démontage simple et aisé, sans manipulations multiples.

Encore un autre objectif de l'invention est de fournir un tel système de solidarisation temporaire, qui permette de mettre en oeuvre un même accessoire sur plusieurs dispositifs, sans surcoût important pour ces dispositifs.

Selon la même approche, un objectif particulier de l'invention est de fournir un tel système de solidarisation temporaire, permettant la mise en oeuvre d'une pluralité d'accessoires.

Selon encore un autre objectif, l'invention a pour objectif de fournir un tel système de solidarisation temporaire, présentant de bonnes qualités d'esthétique, d'ergonomie et de sécurité, notamment lorsqu'aucun accessoire n'est mis en place sur le dispositif de puériculture..

Ces objectifs, ainsi que d'autres qui apparaîtront par la suite, sont atteints à l'aide d'un système de solidarisation temporaire d'au moins un accessoire sur au moins un dispositif de puériculture, selon la revendication 1.

Ainsi, la partie du système de solidarisation liée au dispositif de puériculture est très simple, et donc peu coûteuse. Il est alors possible de mettre en place ces moyens sur de nombreux dispositifs, et de permettre de déplacer aisément un accessoire d'un dispositif à un autre.

La mise en oeuvre d'un ou plusieurs accessoires est par ailleurs, selon cette technique, très simple.

Préférentiellement, ledit manchon est ramené dans ladite position de repos par des moyens de rappel.

De façon avantageuse, ledit manchon est conçu de façon qu'un même mouvement d'une main permet de faire passer ledit manchon de sa position de repos à sa position de libération et de séparer ledit élément femelle dudit élément mâle.

On dispose ainsi d'un système particulièrement facile à mettre en oeuvre.

Ledit élément mâle présente une section choisie de façon à empêcher une rotation axiale dudit élément femelle par rapport audit élément mâle.

Ladite section peut par exemple être hexagonale.

Selon une caractéristique préférentielle de l'invention, ledit élément mâle comprend au moins un logement prévu pour coopérer avec un ergot mobile monté sur ledit élément femelle.

Ledit manchon peut ainsi présenter avantageusement une portion agissant sur ledit ergot, le maintenant dans ledit logement lorsque ledit manchon est en position de repos et le dégageant dudit logement lorsque ledit manchon est en position de libération.

Selon un autre mode de réalisation avantageux de l'invention, ledit élément mâle présente une portion allongée de guidage dudit élément femelle et une portion de solidarisation, s'étendant sensiblement perpendiculairement à ladite portion de guidage, et sur laquelle peut venir se fixer lesdits moyens de verrouillage dudit élément femelle.

De façon à permettre une mise en place aisée, ladite portion de guidage présente préférentiellement une forme sensiblement tronconique ou ovoïde.

Selon un mode de mise en oeuvre avantageux, ledit élément femelle comprend une pièce de solidarisation, présentant un logement de dimension correspondant à celle de ladite portion de solidarisation, et une portion de passage définissant une ouverture élastique, de largeur inférieure à ladite dimension de la portion de solidarisation, dans sa position de repos.

Les dispositifs de puériculture peuvent comprendre un seul élément mâle (pour recevoir par exemple une ombrelle). Au moins certains desdits dispositifs de puériculture peuvent également comprendre deux éléments mâles similaires (pour recevoir par exemple un canopy).

Dans ce cas, lesdits éléments mâles sont avantageusement répartis de façon symétrique sur ledit dispositif de puériculture, au niveau du dossier de ce dernier. Cela est par exemple adapté à la mise en oeuvre d'un canopy, par exemple sur un siège auto.

L'invention concerne également les dispositifs de puériculture comprenant au moins un élément mâle d'un système de solidarisation temporaire tel que décrit ci-dessus.

Ces dispositifs de puériculture peuvent notamment appartenir au groupe comprenant :
- les voitures d'enfant ;
- les sièges pour automobile ;
- les chaises pour enfant;
- les transats pour enfant ;
- les lits pour enfant.

Selon un aspect particulier de l'invention, le dispositif de puériculture peut comprendre deux éléments mâles, prévus pour recevoir notamment un canopy.

De façon avantageuse, le ou lesdits éléments mâles sont mobiles entre au moins deux positions.

Notamment, lesdites positions peuvent comprendre, une position de rangement dans laquelle ils sont au moins partiellement escamotés et une position de travail, dans laquelle ils sont aptes à recevoir un accessoire.

Dans ce cas, avantageusement, le ou lesdits éléments mêles sont montés sur une pièce reliée audit dispositif par des moyens de rappel, tendant à ramener l'élément mâle dans ladite position de rangement, lorsqu'il se trouve dans une position intermédiaire.

L'invention concerne encore les accessoires pour au moins un dispositif de puériculture, comprenant au moins un élément femelle d'un système de solidarisation temporaire tel que décrit ci-dessus.

Ces accessoires peuvent notamment appartenir au groupe comprenant :
- les ombrelles ;
- les canopys ;
- les supports de biberon ;
- les jouets.

D'autres caractéristiques et avantages de l'invention apparaîtront plus clairement à la lecture suivante de la description de deux modes de réalisation préférentiels de l'invention, et des dessins annexés parmi lesquels :
- la figure 1 illustre une poussette mettant en oeuvre un premier mode de réalisation de l'invention, pour recevoir par exemple un ombrelle ;
- les figures 2A et 2B montrent respectivement le principe du montage et du démontage de l'ombrelle de la figure 1 ;
- les figures 3A et 3B sont des vues en coupe du système de solidarisation des figures 2A et 2B, respectivement en position verrouillée et en position de libération ;
- les figures 4a et 4b illustrent un système similaire au mode de réalisation de la figures 1.

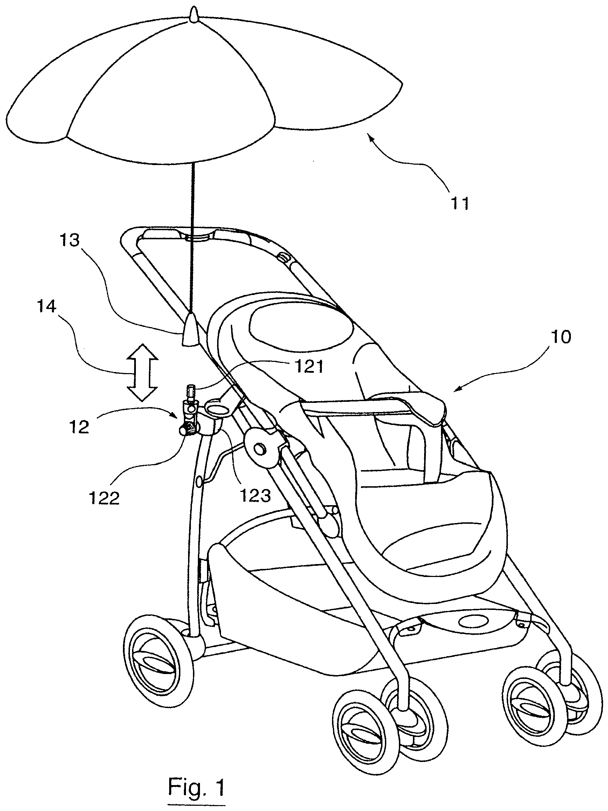

La figure 1 présente une poussette 10, classique en soi, sur laquelle peut être rapporté un accessoire, tel qu'une ombrelle 11. Pour cela, la poussette 10 et l'ombrelle 11 comprennent des moyens de solidarisation temporaire complémentaires 12 et 13 respectivement.

Sur la poussette, on a prévu un élément mâle 12 ne comprenant aucun moyen mobile de verrouillage/déverrouillage, mais seulement un prolongement 121 prévu pour recevoir l'élément femelle.

On obtient donc un moyen 12 très simple, et donc peu coûteux, qui peut aisément être mis en place sur tout type de poussette, et tout type d'autres dispositifs de puériculture, sans surcoût important. On dispose ainsi de la possibilité de monter aisément l'accessoire, en l'occurrence l'ombrelle 11, sur plusieurs dispositifs (par exemple une poussette et un transat), tous équipés ou pré-équipés du moyen mâle 12.

Ce moyen mâle 12 peut, optionnellement, être munis de moyens 122 classiques en soi permettant d'incliner l'ombrelle, en cas de besoin. Il peut être monté de façon définitive sur le châssis de la poussette 10, dès la construction de celui-ci, ou y être solidarisé par des moyens de fixation tels qu'une pince 123.

L'ombrelle 11 est quant à elle équipée d'un élément femelle 13 venant s'emboîter sur l'élément mâle 12.

Comme expliqué par la suite, c'est cet élément femelle qui porte les moyens mobiles permettant le verrouillage et le déverrouillage. Il est ainsi possible de transférer la plus grande partie des coûts du système de solidarisation sur l'accessoire (que l'utilisateur décide ou non d'acheter), et non sur le dispositif de puériculture lui-même, qu'il est donc possible de pré-équiper.

Cette approche permet ainsi d'équiper toute une gamme de dispositifs de puériculture avec toute une gamme d'accessoires, aisément interchangeables.

Les manipulations sont très simples, et reposent sur des déplacements axiaux illustrés par la flèche 14, et réalisables d'une seule main.

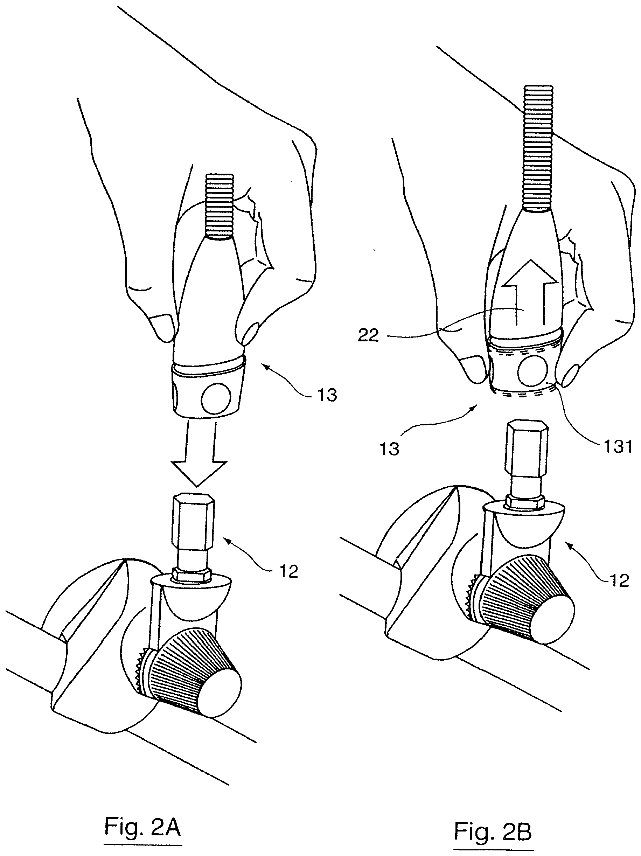

Les figures 2A et 2B illustrent de façon plus précise ce fonctionnement. Il suffit (figure A) de poser, ou d'emboîter, l'élément femelle 13 sur l'élément mâle 12 pour obtenir le montage et le verrouillage de l'accessoire.

Le déverrouillage et le retrait (figure 2B) sont obtenus en agissant sur la bague 131, selon le sens naturel du retrait (flèche 22).

On peut noter que le mécanisme mis en oeuvre se rapproche de celui utilisé en jardinerie, pour les connexions de tuyauteries. Il présente cependant une différence majeure. En effet, dans le cas des tuyauteries, il faut que les deux éléments mâles et femelles restent mobiles en rotation l'un par rapport à l'autre. Ce n'est pas le cas, de façon préférentielle, en ce qui concerne l'invention. La position de l'accessoire (qu'il s'agisse d'une ombrelle, d'un support de biberon, d'un jouet...) est prédéfinie, et ne doit pas changer de façon intempestive au moindre mouvement

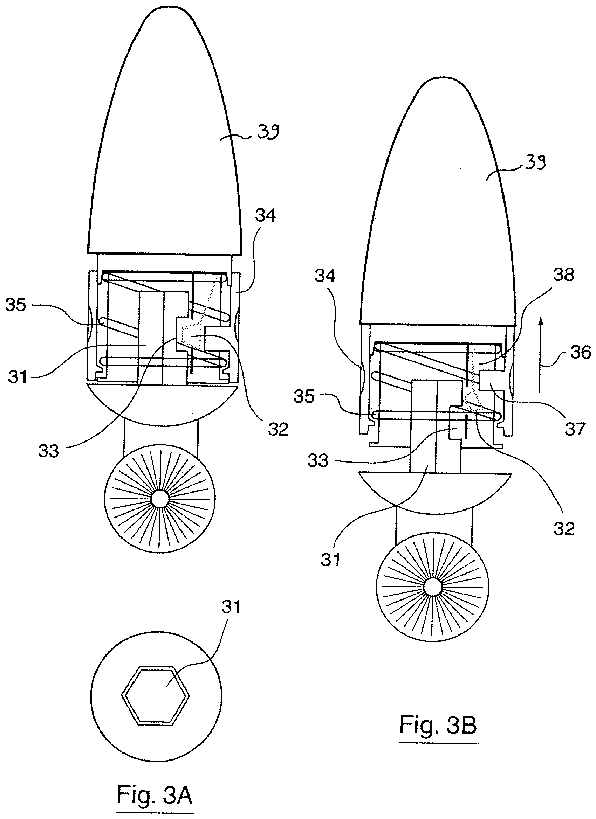

Pour cela, ainsi qu'illustré en figure 3A, l'élément mâle 31 présente une section non circulaire, ne permettant pas la rotation. Cette section est ici hexagonale. Elle peut bien sûr présenter d'autres formes, en fonction des besoins.

Le verrouillage est obtenu par la coopération d'un ergot 32 solidaire de l'élément femelle, et d'un logement 33 prévu dans l'élément mâle pour recevoir l'ergot 32. Ainsi, dès que l'accessoire est mis en place, celui-ci est solidarisé au dispositif de puériculture. Il n'est pas possible de l'enlever en tirant simplement dessus.

Pour assurer le déverrouillage, il suffit cependant d'agir sur la bague, ou manchon, 34. Cette dernière est maintenue dans la position assurant le verrouillage (figure 3A) par un ressort de rappel 35. Lorsque l'on agit sur la bague (flèche 36, figure 3B), en s'opposant à la force de rappel du ressort 35, on déplace la butée 37, montée sur cette bague 36, et qui agit sur un prolongement 38 solidaire de l'ergot 32, pour faire sortir celui-ci du logement 33. L'accessoire peut alors être séparé du dispositif.

Il peut bien sûr y avoir plusieurs ergots, ou une couronne, mis en oeuvre selon un principe similaire.

On notera que l'élément mâle peut être recouvert, en l'absence d'accessoire, par un bouchon 39, pour des raisons d'esthétique, de sécurité et de confort.

Dans les modes de réalisation décrits-ci-dessus, les éléments mâles sont montés de façon fixe sur le dispositif de puériculture. Ils peuvent également être montés de façon mobile, pour permettre un réglage de la position de l'élément mâle et/ou le rangement de ce dernier.

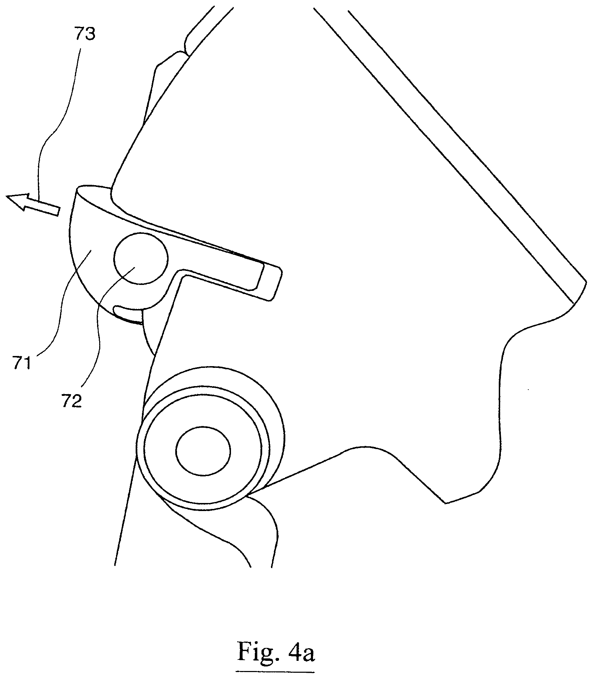

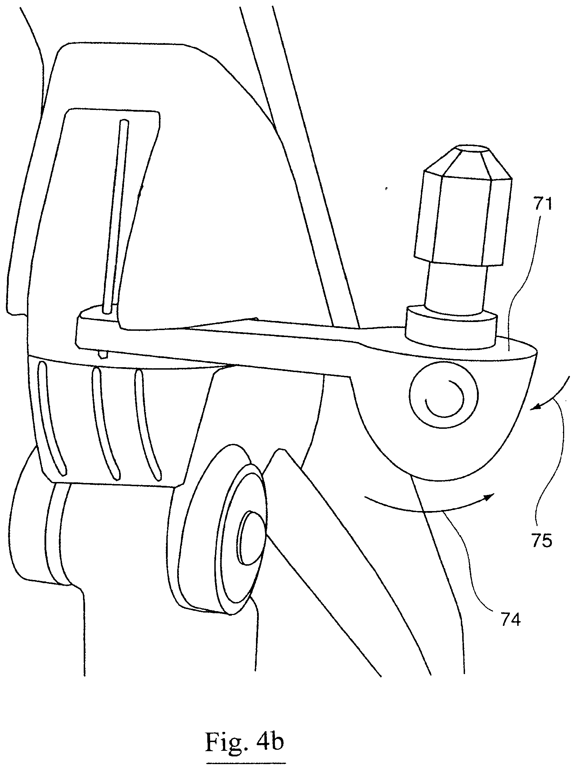

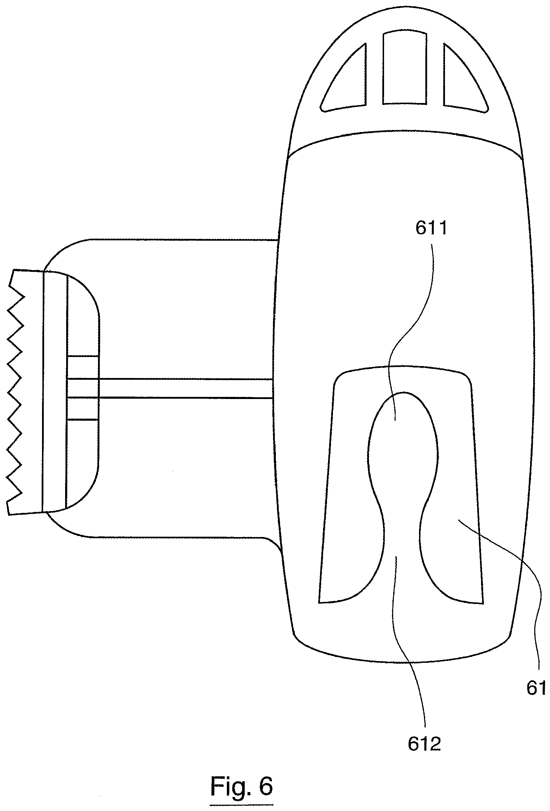

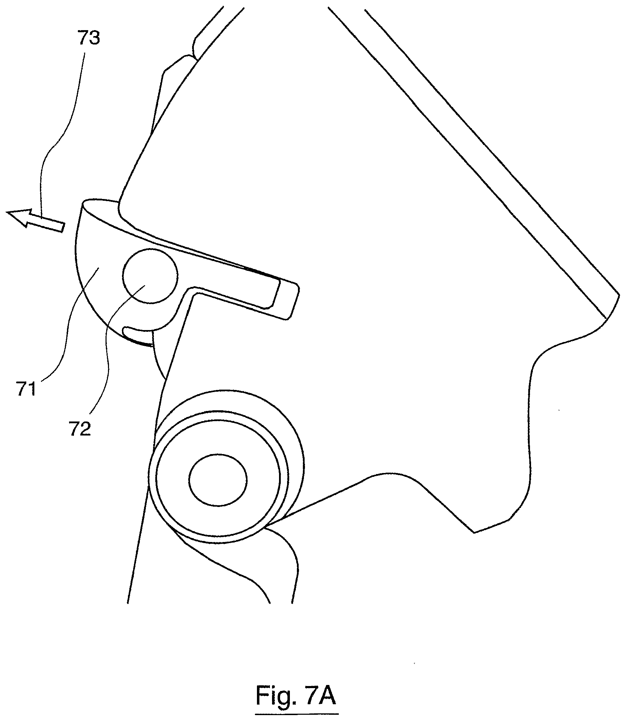

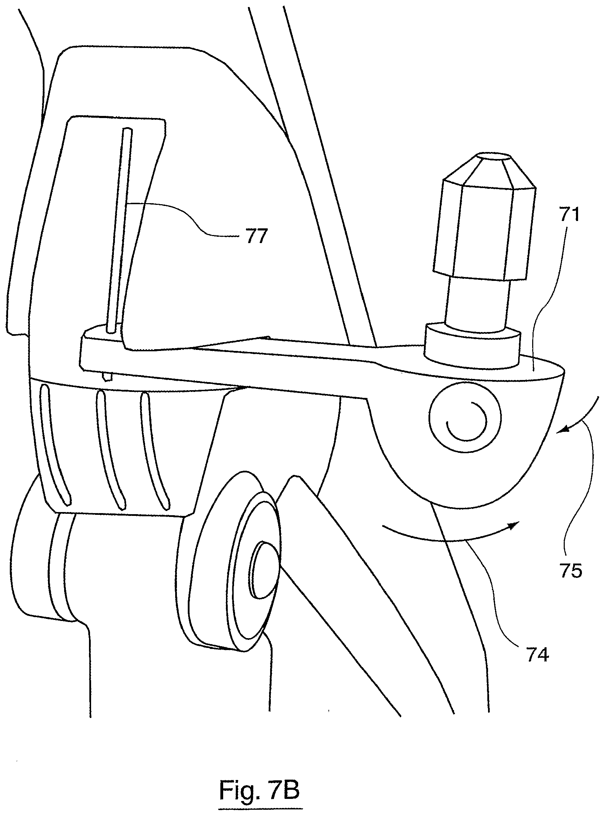

Ainsi, sur les figures 4a et 4b on montre un système similaire au premier mode de réalisation décrit. L'élément mâle 71 peut prendre une position de rangement (figure 4a dans laquelle il se trouver en grande partie logé dans le châssis de la poussette (dont on a représenté que la partie reliant le brancard, le piètement avant et le piètement arrière).

Des protubérances 72 permettent de saisir la pièce 71, pour la tirer vers l'arrière de la poussette (flèche 73, figure 4a) puis de la basculer vers l'extérieur (flèche 74, figure 45). L'élément mâle se trouve alors dans une position stable de travail (figure 4b).

Préférentiellement, des moyens de rappel ramènent l'élément mobile dans la position de rangement, dès que l'on a entamé un mouvement de rangement (flèche 75), c'est-à-dire dès que l'élément n'est plus dans la position stable de travail.

Bien sûr, d'autres modes et mécanismes de rangement ou de réglage de position peuvent aisément être envisagés.

## Revendications

1. Système de solidarisation temporaire d'au moins un accessoire (11) sur au moins un dispositif de puériculture (10), comprenant un élément mâle (12, 71), faisant saillie, coopérant avec un élément femelle (13), complémentaire dudit élément mâle (12, 71),
**caractérisé en ce que** :
- ledit élément mâle (12, 71) est apte à être porté par ledit dispositif de puériculture (10) et présente une section choisie de façon à empêcher une rotation axiale dudit élément femelle (13) par rapport audit élément mâle (12, 71) ;
- ledit élément femelle (13) est apte à être porté par ledit accessoire (11) et présente un manchon mobile (34) selon l'axe dudit élément mâle (12, 71), entre une position de repos dans laquelle ledit système est verrouillé, et une position de libération, permettant la séparation dudit élément femelle (13) et dudit élément mâle (12, 71),
seul ledit élément femelle (13) comprenant des moyens mobiles (31) permettant la solidarisation et/ou la désolidarisation desdits éléments mâle (12, 71) et femelle (13).

2. Système de solidarisation temporaire selon la revendication 1, **caractérisé en ce que** ledit manchon (34) est ramené dans ladite position de repos par des moyens de rappel (35).

3. Système de solidarisation temporaire selon l'une quelconque des revendications 1 et 2, **caractérisé en ce que** ledit manchon (34) est conçu de façon qu'un même mouvement d'une main permet de faire passer ledit manchon (34) de sa position de repos à sa position de libération et de séparer ledit élément femelle (13) dudit élément mâle (12, 71).

4. Système de solidarisation temporaire selon l'une quelconque des revendications 1 à 3, **caractérisé en ce que** ladite section est hexagonale.

5. Système de solidarisation temporaire selon l'une quelconque des revendications 1 à 4, **caractérisé en ce que** ledit élément mâle (12, 71) comprend au moins un logement (33) prévu pour coopérer avec un ergot mobile (32) monté sur ledit élément femelle (13).

6. Système de solidarisation temporaire selon l'une quelconque des revendications 1 à 5, **caractérisé en ce que** ledit manchon (34) présente une portion (38) agissant sur ledit ergot (32), le maintenant dans ledit logement (33) lorsque ledit manchon (34) est en position de repos et le dégageant dudit logement (33) lorsque ledit manchon (34) est en position de libération.

## Patentansprüche

1. System zum temporären Verbinden wenigstens eines Zubehörteils (11) an wenigstens einer Vorrichtung zur Kinderpflege (10), das ein hervorstehendes Steckelement (12, 71) aufweist, das mit einem zu dem Steckelement (12, 71) komplementärem Aufnahmeelement (13) zusammenwirkt, **dadurch gekennzeichnet, dass**:
- das Steckelement (12, 71) ist geeignet, von der Vorrichtung zur Kinderpflege (10) getragen zu werden und weist einen Abschnitt auf, der derart gewählt ist, dass eine axiale Drehung des Aufnahmeelements (13) gegen das Steckelement (12, 71) verhindert wird;
- das Aufnahmeelement (13) ist geeignet, von dem Zubehörteil (11) getragen zu werden und weist eine Hülse (34) auf, die entlang der Achse des Steckelements (12, 71) zwischen einer Ruhestellung, in welcher das System verriegelt ist, und einer Freigabestellung, welche die Trennung des Aufnahmeelements (13) und des Steckelements (12, 71) ermöglicht, beweglich ist,
wobei lediglich das Aufnahmeelement (13) bewegbare Mittel (31) aufweist, welche die Verbindung und/oder die Trennung des Steckelements (12, 71) und des Aufnahmeelements (13) ermöglichen.

2. System zum temporären Verbinden nach Anspruch 1, **dadurch gekennzeichnet, dass** die Hülse (34) in die Ruhestellung durch Rückstellmittel (35) zurückgeführt wird.

3. System zum temporären Verbinden nach einem der Ansprüche 1 und 2, **dadurch gekennzeichnet, dass** die Hülse (34) derart ausgebildet ist, dass die gleiche Bewegung einer Hand ermöglicht, dass die Hülse (34) aus ihrer Ruhestellung in ihre Freigabestellung übergeht und dass das Aufnahmeelement (13) von dem Steckelement (12, 71) getrennt wird.

4. System zum temporären Verbinden nach einem der Ansprüche 1 bis 3, **dadurch gekennzeichnet, dass** der Abschnitt hexagonal ist.

5. System zum temporären Verbinden nach einem der Ansprüche 1 bis 4, **dadurch gekennzeichnet, dass** das Steckelement (12, 71) wenigstens eine Aufnahme (33) aufweist, die dazu vorgesehen ist, mit einem auf dem Aufnahmeelement (13) angeordneten bewegbaren Vorsprung zusammenzuwirken.

6. System zum temporären Verbinden nach einem der Ansprüche 1 bis 5, **dadurch gekennzeichnet, dass** die Hülse (34) einen Abschnitt (38) aufweist, der auf den Vorsprung (32) wirkt und ihn in der Aufnahme (33) hält, wenn sich die Hülse (34) in der Ruhestellung befindet und ihn aus der Aufnahme (33) fernhält, wenn sich die Hülse (34) in der Freigabestellung befindet.

## Claims

1. Temporary solidarisation system of at least one accessory (11) on at least one child care device (10),comprising at least one protruding male element (12, 71), cooperating with one female element (13), complementary to the said male element (12, 71), **characterized in that** :
- the said male element (12, 71) is adapted to be carried by the said child care device (10) and has a section chosen so that it prevents axial rotation of the said female element (13) with respect to the said male element (12, 71) ;
- the said female element (13)is adapted to be carried by the said accessory (11) and has a sleeve (34) free to move along the axis of the said male element (12, 71), between a rest position in which the said system is locked, and a release position separating the said female element (13) from the said male element (12, 71),
only the said female element (13) comprising mobile means (31) for solidarisation and / or desolidarisation of the said male (12, 71) and female (13) elements.

2. Temporary solidarisation system according to claim 1, **characterised in that** the said sleeve (34) is brought into the said rest position by return means (35).

3. Temporary solidarisation system according to either claim 1 or 2, **characterised in that** the said sleeve (34) is designed such that a single hand movement can move the said sleeve (34) from its rest position to its release position and separate the said female element (13) from the said male element (12, 71).

4. Temporary solidarisation system according to any one of claims 1 to 3, **characterised in that** the said section is hexagonal.

5. Temporary solidarisation system according to any one of claims 1 to 4, **characterised in that** the said male element (12, 71) comprises at least one housing (33) designed to cooperate with a mobile pin (32) mounted on the said female element (13).

6. Temporary solidarisation system according to any one of claims 1 to 5, **characterised in that** the said sleeve (34) has one portion (38) acting on the said pin (32), holding it in the said housing (33) when the said sleeve (34) is in the rest position and releasing it from the said housing (33) when the said sleeve (34) is in the release position.
